Europäisches Patentamt

European Patent Office

Office européen des brevets

(19)

(11) Veröffentlichungsnummer: **0 059 261**
**A2**

(12) # EUROPÄISCHE PATENTANMELDUNG

(21) Anmeldenummer: **81109430.9**

(51) Int. Cl.³: **G 06 F 15/20**

(22) Anmeldetag: **30.10.81**

(30) Priorität: **27.02.81 DE 3107652**

(43) Veröffentlichungstag der Anmeldung:
**08.09.82 Patentblatt 82/36**

(84) Benannte Vertragsstaaten:
**AT CH FR GB LI NL SE**

(71) Anmelder: **SIEMENS AKTIENGESELLSCHAFT Berlin und München**
**Postfach 22 02 61**
**D-8000 München 22(DE)**

(72) Erfinder: **Walz, Joachim, Dipl.-Ing.**
**Langelandsgatan 46**
**S-16343 Spånga(SE)**

(54) Verfahren und Anordnung zum Darstellen von grafischen Mustern.

(57) Die Erfindung bezieht sich auf ein Verfahren und eine Anordnung zum Darstellen von grafischen Mustern, die optoelektronisch abgetastet werden und in einem vorgegebenen, verhältnismäßig groben Raster dargestellt werden. Das Raster wird aus Grafikelementen (GE) gebildet, die zu Zeichenfeldern (ZF) zusammengefaßt sind. Eine Verarbeitungseinheit (VE) simuliert eine Verschiebung der abgetasteten grafischen Muster um jeweils ein Grafikelement in horizontaler und/oder vertikaler Richtung und ermittelt diejenige Verschiebung, bei der die geringste Veränderung des grafischen Musters durch das Einfügen von Steuerzeichen und Vorschriften für die Darstellung der Farben erfolgt. Für diese Verschiebung erfolgt eine Codierung des grafischen Musters und eine Ausgabe an einer Ausgabeeinheit (AE).

FIG 1

EP 0 059 261 A2

SIEMENS AKTIENGESELLSCHAFT
Berlin und München

Unser Zeichen
VPA 81 P 6 7 1 5 E

0059261

## Verfahren und Anordnung zum Darstellen von grafischen Mustern

Die Erfindung bezieht sich auf ein Verfahren und eine Anordnung zum Darstellen von grafischen Mustern gemäß dem Oberbegriff des Patentanspruches 1.

Der Telekommunikationsdienst "Bildschirmtext" ("Videotex-Interactive") bietet die Möglichkeit, neben alphanumerischen Zeichen auch grafische Muster auf dem Bildschirm eines Fernsehgerätes darzustellen. Die grafischen Muster werden aus einzelnen Grafikelementen zusammengesetzt. Jede auf dem Bildschirm darstellbare Bildschirmtextseite besteht bei einer Darstellung von grafischen Mustern aus 80x72=5760 Grafikelementen. Jeweils sechs Grafikelemente sind zu einem Zeichenfeld mit der Größe 2x3 zusammengefaßt. Damit ergeben sich 40x24=960 Zeichenfelder pro Seite. Die grafischen Muster sind in acht Farben darstellbar, wobei innerhalb eines Zeichenfeldes nur eine Vorder- und eine Hintergrundfarbe möglich ist. Die Codierung der grafischen Muster erfolgt im Raster der Zeichenfelder durch Codewörter.

Ein grafisches Muster kann über eine Editiertastatur aufgebaut werden. Dabei werden über entsprechende Tasten die einzelnen Grafikelemente derart belegt, daß das darzustellende Muster der entsprechenden Vorlage entspricht. Eine Darstellung von umfangreichen grafischen Mustern unter Verwendung der Editiertastatur erfordert jedoch einen erheblichen Zeitaufwand. Falls das grafische Muster bereits auf einer Vorlage dargestellt ist, ist es mög-

Ret 1 Kdg / 26. Febr. 1981

lich, dieses grafische Muster sehr schnell durch eine optoelektronische Abtastung einzugeben. Die Abtastung kann unter Verwendung einer Fernsehkamera oder mit Hilfe eines Abtasters erfolgen, der die Vorlage zeilenweise abtastet. Zweckmäßigerweise werden die Vorlagen bereits in dem aus den Grafikelementen bzw. den Zeichenfeldern gebildeten Raster und in den entsprechenden Farben dargestellt. Bei der Abtastung werden jedem Grafikelement auf der Vorlage dann Binärzeichen zugeordnet, die für eine weitere Verarbeitung in einem Bildpunktspeicher zwischengespeichert werden.

Den Binärzeichen im Bildpunktspeicher werden in einem Codierer Codewörter zugeordnet, die die Adressen von möglichen Kombinationen der Grafikelemente innerhalb eines Zeichenfeldes in einem Zeichengenerator darstellen. Die Codewörter werden in einem dem Codierer nachgeschalteten Ausgabespeicher gespeichert. Unter Verwendung der Codewörter werden aus den Zeichengeneratoren Datenwörter ausgelesen und einer Bildsteuereinheit in einer Ausgabeeinheit, beispielsweise einer mit einem Bildschirm versehenen Anzeigeeinheit zugeführt. Die Zuordnung der Codewörter zu den Kombinationen der Grafikelemente innerhalb eines Zeichenfeldes ist beispielsweise aus der Zeitschrift "Funkschau" (1977), Heft 18, Seiten 78-82 bekannt.

Die Eigenschaften der Zeichenfelder, wie beispielsweise die Farben der Grafikelemente oder eine blinkende oder nicht blinkende Darstellung, werden durch Steuerzeichen bestimmt. In dem Ausgabespeicher sind die Steuerzeichen bei einer seriellen Codierung den Codewörtern vorangestellt und sie beanspruchen den Platz eines Codewortes. An der Ausgabeeinheit kann daher an dieser Stelle kein Zeichenfeld dargestellt werden. Bei einer parallelen Codierung wird die Anzahl der Binärzeichen der Codewörter derart vergrößert, daß als Begleitinformation ein Steuerzeichen hinzugefügt werden kann. In diesem Fall entfallen die für die Steuerzeichen vorgesehenen Lücken an der Ausgabeeinheit. Falls die zusätzlichen Binärzeichen jedoch nicht ausreichen, müssen den Codewörtern ebenfalls Steuerzeichen vorangestellt werden, so daß auch hier, wie bei der seriellen Codierung, die Gefahr besteht, daß eingegebene grafische Muster durch die vorangestellten Steuerzeichen in unerwünschter Weise verändert werden. Eine Veränderung der eingegebenen grafischen Muster bei der Darstellung an der Ausgabeeinheit kann auch durch die Bedingung eintreten, daß innerhalb eines Zeichenfeldes nur eine Vorder- und eine Hintergrundfarbe zulässig ist.

Der Erfindung liegt die Aufgabe zugrunde, ein Verfahren und eine Anordnung anzugeben, mit deren Hilfe es möglich ist, eingegebene grafische Muster derart in das durch die Grafikelemente und die Zeichenfelder vorgegebene Raster einzuordnen, daß eine größtmögliche Übereinstimmung zwischen dem eingegebenen grafischen Muster und dem ausgegebenen grafischen Muster besteht.

Erfindungsgemäß wird die Aufgabe bei dem Verfahren der eingangs genannten Art gelöst durch die Aufeinanderfolge folgender Verfahrensschritte:

a) die Anzahl der durch die Umsetzung der Binärzeichen in die Codewörter geänderten Grafikelemente und/oder Zeichenfelder wird ermittelt und gespeichert,

b) die im Bildpunktspeicher durch Binärzeichen gespeicherten grafischen Muster werden virtuell um jeweils ein Grafikelement in horizontaler und/oder vertikaler Richtung schrittweise verschoben,

c) bei jeder Verschiebung wird die Anzahl der durch die Verschiebung geänderten Grafikelemente und/oder Zeichenfelder ermittelt und gespeichert,

d) diejenige Verschiebung, bei der die geringste Veränderung des grafischen Musters auftritt, wird ermittelt und für diese Verschiebung erfolgt eine Umsetzung in die Codewörter und die Einspeicherung der Codewörter in einen der Ausgabeeinheit zugeordneten Ausgabespeicher.

Das Verfahren gemäß der Erfindung hat den Vorteil, daß selbsttätig die optimale Darstellung des eingegebenen grafischen Musters an der Ausgabeeinheit erfolgt. Die Erstellung der Vorlagen kann damit auch von einem weniger geschulten Personal vorgenommen werden, da die Berücksichtigung der Steuerzeichen und die Beschränkung auf eine Vorder- und eine Hintergrundfarbe nicht unbedingt bei der Erstellung der Vorlage bereits erfolgen muß.

Das Verfahren erweist sich insbesondere dann als vorteilhaft, wenn nach der Ermittlung derjenigen Verschiebung, bei der die geringste Veränderung des grafischen Musters auftritt, die Binärzeichen entsprechend verschoben in einen weiteren Bildpunktspeicher eingespeichert werden.

Da die Umsetzung der Binärzeichen in die Codewörter ohnehin erfolgt, ist es zweckmäßig, wenn die Ermittlung der geringsten Verschiebung des grafischen Musters nach der Umsetzung der Binärzeichen in die Codewörter erfolgt.

Eine für unterschiedliche Anwendungsfälle optimale Darstellung der eingegebenen grafischen Muster kann erreicht werden, wenn die Ermittlung der geringsten Veränderung durch die Berechnung der kleinsten Anzahl von Zeichenfeldern oder Grafikelementen erfolgt, die durch die Steuerzeichen ersetzt werden oder durch die Berechnung der kleinsten Anzahl von Zeichenfeldern oder Grafikelementen erfordert, deren Farben verändert werden.

Eine optimale Darstellung wird für die meisten Anwendungsfälle dann erreicht, wenn die Ermittlung der geringsten Veränderung durch die Berechnung der kleinsten Summe der unterschiedlich gewichteten kleinsten Anzahlen von Zeichenfeldern und Grafikelementen erfolgt, die verändert werden.

Eine vorteilhafte Ausführungsform einer Anordnung zur Durchführung des Verfahrens ist dadurch gekennzeichnet, daß dem Bildpunktspeicher eine Verarbeitungseinheit nachgeschaltet ist, die die Verschiebung der Binärzeichen im Bildpunktspeicher simuliert und die diejenige Verschiebung ermittelt, bei der die geringste Veränderung des grafischen Musters auftritt, daß der Verarbeitungseinheit ein weiterer Bildpunktspeicher nachgeschaltet ist, in dem die Binärzeichen entsprechend der gerinsten Veränderung eingespeichert werden und daß dem weiteren Bildpunktspeicher ein Codierer nachgeschaltet ist, der die Binärzeichen in Codewörter umsetzt und diese in einen mit der Ausgabeeinheit verbundenen Ausgabespeicher einspeichert.

Es ist möglich, die grafischen Muster außer mittels der Editiertastatur auch durch ein Zeichentableau einzugeben, das die Bewegung eines Zeichenstifts aufzeichnet. Eine besonders vorteilhafte Eingabe der grafischen Muster wird jedoch erreicht, wenn dem Bildpunktspeicher als Eingabeeinheit eine Abtasteinheit vorgeschaltet ist, die die auf einer Vorlage dargestellten grafischen Muster optoelektronisch abtastet.

Im folgenden wird eine Durchführung des Verfahrens gemäß der Erfindung anhand von Zeichnungen beschrieben. Es zeigen:

Figur 1 ein Blockschaltbild einer Anordnung zur Durchführung des Verfahrens,

Figur 2 eine Darstellung eines eingegebenen grafischen Musters,

Figur 3 Darstellungen der für eine Ausgabe aufbereiteten grafischen Muster nach einer Verschiebung in horizontaler und/oder vertikaler Richtung.

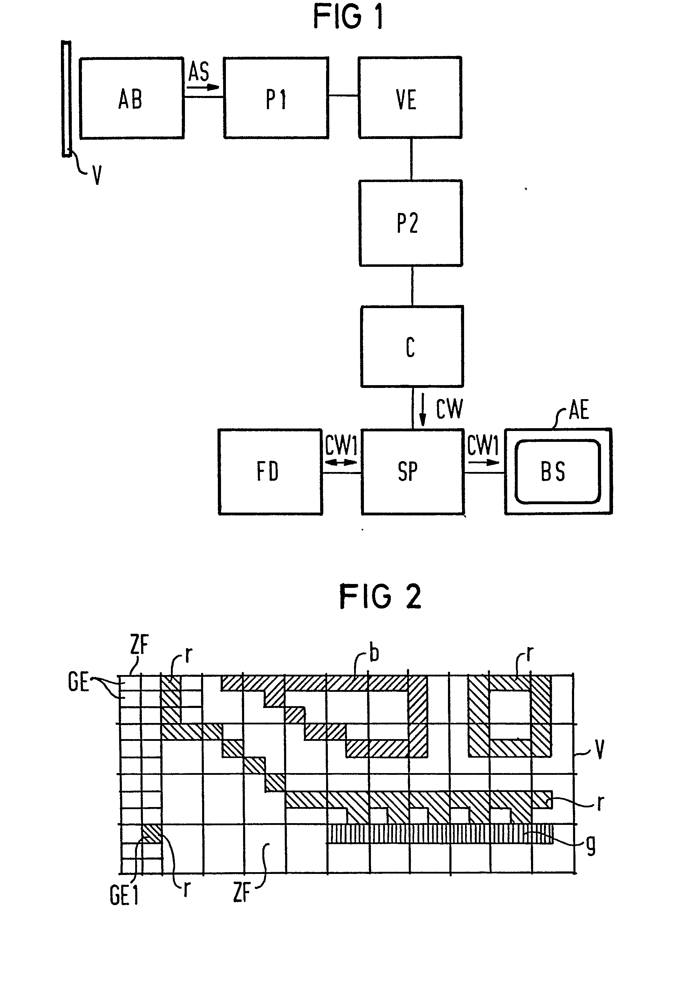

Bei der in Figur 1 dargestellten Anordnung wird eine mit dem grafischen Muster versehene Vorlage V unter Verwendung einer Abtasteinheit AB linienweise optoelektronisch abgetastet. Die Abtasteinheit AB erzeugt Abtastsignale AS, die den Hell-Dunkel-Werten und den Farbwerten des grafischen Musters zugeordnet sind. Die Abtastsignale werden in einem Bildpunktspeicher P1 derart eingespeichert, daß dessen Inhalt ein Abbild des abgetasteten grafischen Musters darstellt. Dem Bildpunktspeicher P1 ist eine Verarbeitungseinheit VE nachgeschaltet, die den Inhalt des Bildpunktspeichers P1 derart verarbeitet, daß nach einer Einteilung des abgetasteten grafischen Musters in vorgegebene Grafikelemente und Zeichenfelder eine größtmögliche Ähnlichkeit mit dem ursprünglichen grafischen Muster besteht. Das optimale verarbeitete grafische Muster wird in einen Bildpunktspeicher P2 eingespeichert. Diesem ist ein Codierer C nachgeschaltet, der den Inhalt des Bildpunktspeichers P2 in eine für den Telekommunikationsdienst "Bildschirmtext" geeigneten Code umsetzt. Die entsprechenden Codewörter CW werden in einen Ausgabespeicher SP eingespeichert, dessen Inhalt dem einer an einer an einem Bildschirm BS einer Ausgabeeinheit AE darstellbaren Seite entspricht. Zusätzlich kann an dem Ausgabespeicher SP ein peripherer Speicher FD, beispielsweise ein Floppy-Disk-Gerät, angeschlossen sein, in dem die Codewörter CW1 permanent speicherbar sind.

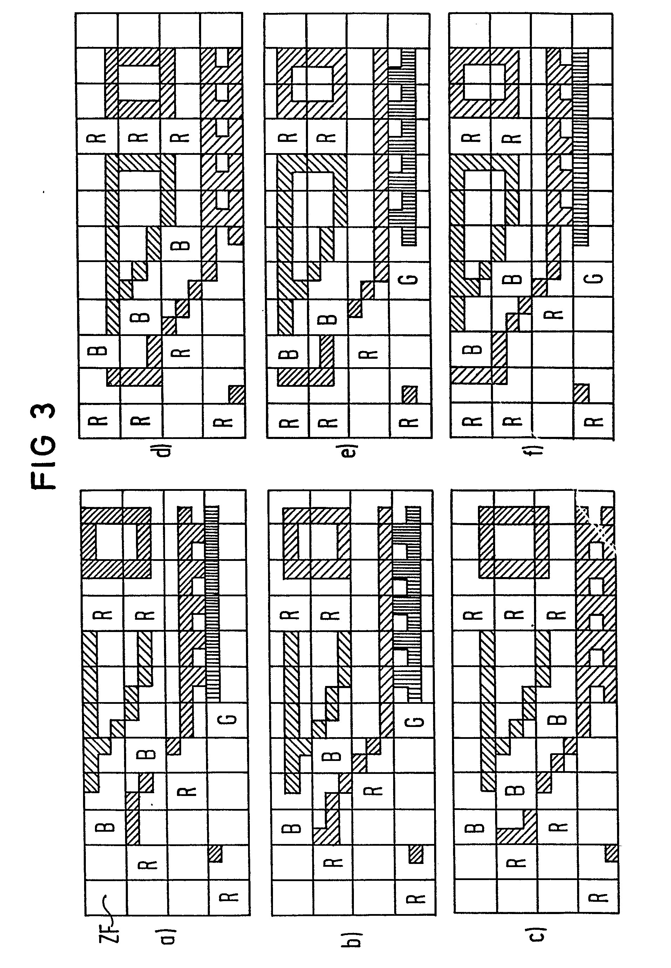

Weitere Einzelheiten der Figur 1 werden im folgenden zusammen mit den in den Figuren 2 und 3 dargestellten grafischen Mustern beschrieben.

Bei der Darstellung in Figur 2 ist das grafische Muster auf einer Vorlage V dargestellt, wie sie für die Eingabe von Seiten beim Dienst "Bildschirmtext" verwendet wird. Die Vorlage V enthält ein Raster, das aus Zeichenfeldern

ZF gebildet wird, die jeweils sechs Grafikelemente GE enthalten. Das grafische Muster enthält mit r bezeichnete rote Teile, die nach rechts abfallend schraffiert sind, mit b bezeichnete blaue Teile, die nach rechts steigend schraffiert sind und mit g bezeichnete grüne Teile, die senkrecht schraffiert sind. Die Vorlage V wird linienweise abgetastet, wobei die Linie der Höhe eines Grafikelementes GE entspricht. Die Abtastsignale AS geben die Helligkeitswerte und die Farbwerte der Grafikelemente GE an und sie werden an jeweils den Grafikelementen GE entsprechenden Speicherstellen im Bildpunktspeicher P1 eingespeichert.

Es wird angenommen, daß die Vorlage V derart vor der Abtasteinheit AB angeordnet ist, daß das Grafikelement GE die rechte obere Ecke eines Zeichenfeldes ZF ausfüllt. Falls die Verarbeitungseinheit VE keine Verarbeitung des abgetasteten grafischen Musters vornehmen würde, würde das Muster entsprechend in den Bildpunktspeicher G2 übernommen werden und anschließend codiert werden. Bei der Erzeugung der Codewörter CW wird bei einer seriellen Codierung die Farbe der jeweils folgenden Zeichenfelder durch entsprechende Steuerzeichen gekennzeichnet. Diese Steuerzeichen werden anstelle der Codewörter CW im Ausgabespeicher SP gespeichert, so daß an diesen Stellen keine Codewörter von grafischen Mustern gespeichert werden können. Am Bildschirm BS hat dies zur Folge, daß an dieser Stelle kein grafisches Muster darstellbar ist.

In Figur 3 ist bei a dargestellt, wie das grafische Muster entsprechend Figur 2 am Bildschirm BS dargestellt werden würde, wenn die Steuerzeichen vor den entsprechenden Mustern eingefügt werden würden. Aus Gründen der Verständlichkeit wurde in Figur 3 das Raster der Zeichenfelder dargestellt. Weiterhin wurden die die Farben blau, grün und rot kennzeichnenden Steuerzeichen B, G und R dargestellt. Sowohl das Raster als auch die Steuerzeichen werden normalerweise am Bildschirm nicht dargestellt.

Wie in Figur 3 bei a dargestellt ist, wird das grafische Muster durch die beiden Steuerzeichen B und die beiden rechten Steuerzeichen R verändert, da an diesen Stellen die entsprechenden Grafikelemente GE nicht dargestellt werden können.

Die Verarbeitungseinheit VE simuliert die Umsetzung, die normalerweise im Codierer C erfolgt und ermittelt die Anzahl der veränderten Grafikelemente GE und Zeichenfelder ZF, um eine Fehlerzahl F zu ermitteln. Die Anzahl LZ der durch die Steuerzeichen gelöschten Zeichenfelder ZF beträgt, wie bereits erwähnt, vier. Innerhalb dieser vier gelöschten Zeichenfelder wurden LG=9 Grafikelemente GE gelöscht, nämlich vier rote Grafikelemente GE und fünf blaue Grafikelement GE. Die Anzahl FZ der Zeichenfelder, deren Farben geändert wurde, ist Null und dementsprechend ist auch die Anzahl FG der Grafikelemente GE, deren Farbe geändert wurde, gleich Null. Die Verarbeitungseinheit VE ermittelt durch unterschiedliche Gewichtung der gelöschten bzw. veränderten Zeichenfelder ZF und Grafikelemente GE die Fehlerzahl F. Hierbei wird die Anzahl LZ mit 12 multipliziert, die Anzahl LG mit 2, die Anzahl FZ mit 12 und die Anzahl FG mit 3 multipliziert. Die Summe dieser Produkte ergibt die Fehlerzahl F. Sie beträgt für das bei a dargestellte grafische Muster 66.

Die Verarbeitungseinheit VE versucht durch eine virtuelle Verschiebung des im Bildpunktspeicher B1 gespeicherten grafischen Musters in horizontaler und/oder vertikaler Richtung eine möglichst kleine Fehlerzahl F zu erreichen. Da jedes Zeichenfeld ZF sechs Grafikelemente GE enthält, kann das grafische Muster insgesamt 6 mal verschoben werden, bis sich die gleiche Codierung wiederholt.

Die in Figur 3 bei b gezeigte Darstellung zeigt das grafische Muster, wie es nach einer Verschiebung um ein Grafikelement GE in vertikaler Richtung ausgegeben werden würde. In diesem Fall würden sieben Grafikelemente GE in drei Zeichenfeldern ZF durch Steuerzeichen gelöscht werden und außerdem würden in fünf Zeichenfeldern ZF die Farben von fünf Grafikelementen GE von rot nach grün verändert werden. Dies kommt daher, daß innerhalb eines Zeichenfeldes nur eine Vorder- und eine Hintergrundfarbe auftreten darf. Falls mehrere Farben auftreten, wird durch eine Mehrheitsentscheidung die Vorder- und die Hintergrundfarbe festgelegt. Durch die Verschiebung ergibt sich bei dieser Darstellung eine Fehlerzahl $F=125$.

Bei einer weiteren Verschiebung in vertikaler Richtung werden sieben Grafikelemente GE in fünf Zeichenfeldern ZF durch die Steuerzeichen gelöscht. Außerdem werden alle elf grünen Grafikelemente GE in sechs Zeichenfeldern ZF in rote abgeändert, so daß sich für diese Verschiebung eine Fehlerzahl $F=179$ ergibt.

Wie in Figur 3 bei d dargestellt ist, wird bei einer folgenden Verschiebung in horizontaler Richtung kein Grafikelement GE mehr durch Steuerzeichen gelöscht. Jedoch bleibt die Veränderung der elf grünen Grafikelemente GE in sechs Zeichenfeldern ZF erhalten. Damit ergibt sich hiermit eine Fehlerzahl $F=105$.

Bei einer anschließenden Verschiebung in vertikaler Richtung ergibt sich, wie bei e dargestellt, eine Fehlerzahl $F=89$. In diesem Fall wird nur noch ein Grafikelement GE in einem Zeichenfeld ZF gelöscht und fünf rote Grafikelemente GE werden in fünf Zeichenfeldern ZF in grüne Grafikelemente GE abgeändert.

Die optimale Darstellung wird, wie bei f dargestellt, durch eine weitere Verschiebung in vertikaler Richtung erreicht. Bei dieser Darstellung wird weder ein Grafikelement GE durch ein Steuerzeichen gelöscht, noch wird die Farbe eines Grafikelementes GE verändert. Es ergibt sich damit die Fehlerzahl F=0.

Die Verarbeitungseinheit VE führt nach der Verarbeitung und der Ermittlung der geringsten Fehlerzahl die virtuelle Verschiebung des Inhalts des Bildpunktspeichers P1 durch und speichert die Binärwerte entsprechend verschoben in den Bildpunktspeicher P2 ein. Anschließend erfolgt in bekannter Weise die Umsetzung in die Codewörter CW und das Einspeichern in den Ausgabespeicher SP.

Die Ermittlung der Fehlerzahl F durch das Aufsummieren der einzelnen Produkte kann auch mit einer anderen Gewichtung erfolgen und ist auch nicht in jedem Fall erforderlich. Falls beispielsweise Veränderungen der Farbe eine untergeordnete Rolle spielen und die Vollständigkeit des Musters wichtiger ist, kann eine optimale Darstellung auf einfache Weise dadurch ermittelt werden, daß die Anzahl der durch Steuerzeichen gelöschten Grafikelemente GE oder der zugehörigen Zeichenfelder ZF möglichst klein ist. Falls die Vollständigkeit der Konturen weniger wichtig ist und das Hauptgewicht auf die Farben gelegt wird, ist es auch möglich, die optimale Darstellung dadurch zu finden, daß die Anzahl der hinsichtlich der Farbe veränderten Grafikelemente GE oder der zugehörigen Zeichenfelder ZF möglichst klein ist.

Die Ermittlung der optimalen Darstellung kann auch dadurch erfolgen, daß unter Verwendung einer geeigneten Steuereinheit die Fehlerzahlen F am Ausgang des Codierers C ermittelt werden. In diesem Fall führt die Verarbeitungseinheit VE lediglich eine schrittweise Verschiebung der gespeicherten grafischen Muster durch. Anhand der Codewörter CW werden dann für jede Verschiebung die Fehlerzahl F oder die Minimalwerte von LZ, LG, FZ oder

**0059261**

FG ermittelt. Für die endgültige Darstellung wird dann die optimale Verschiebung nochmals von der Verarbeitungseinheit VE durchgeführt und erst dann werden die Codewörter CW in den Ausgabespeicher SP eingespeichert.

Die gespeicherten Codewörter CW1 werden der Anzeigeeinheit AE zugeführt, die einen Zeichengenerator enthält, der den Codewörtern CW1 die Datenwörter zuordnet, mittels denen das Videosignal für den Bildschirm BS dargestellt wird.

10 Patentansprüche
3 Figuren

Patentansprüche

1. Verfahren zum Darstellen von grafischen Mustern, bei dem die mittels einer Eingabeeinheit eingegebenen grafischen Muster durch Binärzeichen codiert und in einem Bildpunktspeicher gespeichert werden, bei dem die grafischen Muster an einer Ausgabeeinheit durch Grafikelemente dargestellt werden, die in einem vorgegebenen Raster angeordnet sind und die zu Zeichenfeldern zusammengefaßt werden und bei dem die Binärzeichen in Codewörter umgesetzt werden, die den Zeichenfeldern und zugehörigen Steuerzeichen zugeordnet sind, wobei die Steuerzeichen an den Plätzen der jeweils vorhergehenden Zeichenfelder angeordnet sind,
g e k e n n z e i c h n e t   d u r c h
die Aufeinanderfolge folgender Verfahrensschritte:

a) die Anzahl der durch die Umsetzung der Binärzeichen in die Codewörter (CW) geänderten Grafikelemente (GE) und/oder Zeichenfelder (ZF) wird ermittelt und gespeichert,

b) die im Bildpunktspeicher (P1) durch Binärzeichen gespeicherten grafischen Muster werden virtuell um jeweils ein Grafikelement (GE) in horizontaler und/oder vertikaler Richtung schrittweise verschoben,

c) bei jeder Verschiebung wird die Anzahl der durch die Verschiebung geänderten Grafikelemente (GE) und/oder Zeichenfelder (ZF) ermittelt und gespeichert,

d) diejenige Verschiebung, bei der die geringste Veränderung des grafischen Musters auftritt, wird ermittelt und für diese Verschiebung erfolgt eine Umsetzung in die Codewörter (CW) und die Einspeicherung der Codewörter (CW) in einen der Ausgabeeinheit (AE) zugeordneten Ausgabespeicher (SP).

2. Verfahren nach Anspruch 1,
d a d u r c h   g e k e n n z e i c h n e t ,
daß nach der Ermittlung derjenigen Verschiebung, bei der
die geringste Veränderung des grafischen Musters auftritt,
die Binärzeichen entsprechend verschoben in einen weiteren Bildpunktspeicher (P2) eingespeichert werden.

3. Verfahren nach Anspruch 1,
d a d u r c h   g e k e n n z e i c h n e t ,
daß die Ermittlung der geringsten Verschiebung des
grafischen Musters nach der Umsetzung der Binärzeichen
in die Codewörter (CW) erfolgt.

4. Verfahren nach einem der Ansprüche 1 bis 3,
d a d u r c h   g e k e n n z e i c h n e t ,
daß die Ermittlung der geringsten Veränderung durch die
Berechnung der kleinsten Anzahl (LZ) von Zeichenfeldern
(ZF) erfolgt, die durch Steuerzeichen (B, G, R) gelöscht
werden.

5. Verfahren nach einem der Ansprüche 1 bis 3,
d a d u r c h   g e k e n n z e i c h n e t ,
daß die Ermittlung der geringsten Veränderung durch die
Berechnung der kleinsten Anzahl (LG) von Grafikelementen
(GE) erfolgt, die durch Steuerzeichen (B, G, R) gelöscht
werden.

6. Verfahren nach einem der Ansprüche 1 bis 3,
d a d u r c h   g e k e n n z e i c h n e t ,
daß die Ermittlung der geringsten Veränderung durch die
Berechnung der kleinsten Anzahl (FZ) von Zeichenfeldern
(ZF) erfolgt, in denen Farben von Grafikelementen (GE)
verändert werden.

7. Verfahren nach einem der Ansprüche 1 bis 3,
d a d u r c h   g e k e n n z e i c h n e t ,
daß die Ermittlung der geringsten Veränderung durch die
Berechnung der kleinsten Anzahl (FG) von Grafikelementen

(GE) erfolgt, deren Farben verändert werden.

8. Verfahren nach einem der Ansprüche 1 bis 3,
d a d u r c h   g e k e n n z e i c h n e t ,
daß die Ermittlung der geringsten Veränderung durch die Berechnung der kleinsten Summe der unterschiedlich gewichteten kleinsten Anzahlen (LZ, LG, FZ, FG) von Zeichenfeldern (ZF) und Grafikelementen (GE) erfolgt, die verändert werden.

9. Anordnung zur Durchführung des Verfahrens nach Anspruch 1,
d a d u r c h   g e k e n n z e i c h n e t ,
daß dem Bildpunktspeicher (P1) eine Verarbeitungseinheit (VE) nachgeschaltet ist, die die Verschiebung der Binärzeichen im Bildpunktspeicher (P1) simuliert und die diejenige Verschiebung ermittelt, bei der die geringste Veränderung des grafischen Musters auftritt, daß der Verarbeitungseinheit (VE) ein weiterer Bildpunktspeicher (P2) nachgeschaltet ist, in dem die Binärzeichen entsprechend der geringsten Veränderung eingespeichert werden und daß dem weiteren Bildpunktspeicher (P2) ein Codierer (C) nachgeschaltet ist, der die Binärzeichen in Codewörter (CW) umsetzt und diese in einen mit der Ausgabeeinheit (AE) verbundenen Ausgabespeicher (SP) einspeichert.

10. Anordnung nach Anspruch 9,
d a d u r c h   g e k e n n z e i c h n e t ,
daß dem Bildpunktspeicher (P1) als Eingabeeinheit eine Abtasteinheit (AB) vorgeschaltet ist, die die auf einer Vorlage (V) dargestellten grafischen Muster optoelektronisch abtastet.

## FIG 1

## FIG 2

FIG 3